# EUROPÄISCHE PATENTSCHRIFT

(11) **EP 1 784 333 B1**
(45) Veröffentlichungstag und Bekanntmachung des Hinweises auf die Patenterteilung: **15.10.2014**
(21) Anmeldenummer: 05777602.3
(22) Anmeldetag: 27.08.2005
(51) Int. Cl.: B64F 1/30

(54) **TRANSPORTABLE KONTROLLSTATION ZUR ÜBERPRÜFUNG VON PERSONEN UND GEPÄCK**
TRANSPORTABLE CONTROL STATION FOR CONTROLLING PEOPLE AND LUGGAGE
STATION DE CONTROLE TRANSPORTABLE SERVANT AU CONTROLE DE PERSONNES ET DE BAGAGES

(30) Priorität: 03.09.2004 DE 102004043158
(43) Veröffentlichungstag der Anmeldung: 16.05.2007
(73) Patentinhaber: Smiths Heimann GmbH, 65205 Wiesbaden (DE)
(72) Erfinder: KNÖSPEL, Walter, 65366 Geisenheim (DE); KIRSTEN, Erwin, 55218 Ingelheim (DE); HEMP, Fred, 55411 Bingen (DE); ROE, Kristofer, Pine Brook, NJ 07058 (US); AUST, Stefan, 65510 Idstein (DE)
(74) Vertreter: Greif, Thomas
(86) Internationale Anmeldenummer: PCT/EP2005/009259
(87) Internationale Veröffentlichungsnummer: WO 2006/027122

(56) Entgegenhaltungen:
- WO-A-81/03004
- BE-A- 742 275
- DE-A1- 4 023 415
- FR-A- 2 587 680
- US-A1- 2005 074 086
- US-A1- 2009 074 138

## Beschreibung

Die Erfindung betrifft eine transportable Kontrollstation zur Überprüfung von Personen und Gepäck.

Zur Überprüfung von Personen und Gepäck vor den Eintritt in sicherheitsrelevante Zonen sind eine Vielzahl von Verfahren und Geräten bekannt. So sind bekannterweise auf Flughäfen Röntgenprüfanlagen für das Reisegepäck und Metalldetektoren zur Personenkontrolle fest installiert, um die Flugpassagiere und ihr Reisegepäck auf sicherheitsrelevante Gegenstände wie Waffen, Explosivstoffe etc. zu überprüfen.

Ebenso sind bereits mobile Röntgenprüfanlagen bekannt, mit denen zur Überprüfung von Gegenständen diese mit Röntgenstrahlung durchstrahlt werden. So beschreibt die DE 195 32 965 A eine mobile, selbstfahrende Röntgenprüfanlage für großvolumige Güter, die als Spezialfahrzeug gestaltet zu verschiedenen Einsatzorten gefahren werden kann. Aus der DE 40 23 415 ist eine mobile Prüfanlage für Gepäckstücke bekannt, bei der in einem transportablen Container die Elemente einer Röntgenprüfanlage, nämlich die Stromversorgung für die Strahlengeneratoren, die Strahlengeneratoren, die Strahlenempfänger sowie ein Bedienbereich angeordnet sind. Durch den Container führt eine Transportstrecke für die zu prüfenden Gegenstände, die so beim Durchlauf durch den Container geprüft werden.

FR2587680 beschreibt eine transportable containerartige Kontrollstation mit Durchgangszone und Prüfeinrichtung, welche an zwei gegenüberliegenden Wänden je ein Tor aufweist.

Die bekannten mobilen Prüfanlagen sind für den Schutz von zeitlich begrenzten Versammlungen, wie Sport- oder Kulturveranstaltungen, Tagungen etc., insbesondere wenn diese auf öffentlichen Straßen oder Plätzen stattfinden, weniger geeignet, da sie nicht in der Lage sind, Teilnehmer mit ihrem Handgepäck ausreichend schnell und intensiv zu prüfen. Festinstallierte Anlagen sind für diese Versammlungen häufig zu aufwendig oder aufgrund der örtlichen Gegebenheiten nicht einsetzbar.

Der Erfindung liegt daher die Aufgabe zugrunde, eine mobile Prüfvorrichtung für Personen und deren Handgepäck zu schaffen, die schnell und ohne großen Aufwand an verschiedene Einsatzorte transportiert werden kann und in der Lage ist, Personen und ihr Gepäck schnell zu prüfen.

Diese Aufgabe wird nach der Erfindung dadurch gelöst, dass die mobile Prüfvorrichtung als transportable Kontrollstation ausgebildet ist, die aus einer transportablen, container-artigen Raumzelle besteht, die an zwei gegenüberliegenden Wänden jeweils zumindest ein Tor aufweist, zwischen denen im Inneren der Raumzelle eine Durchgangszone für Personen gebildet ist und wobei im Bereich der Durchgangszone eine Personenprüfeinrichtung und neben der Durchgangszone eine Prüfanlage für Gepäck mit einem Bedienplatz angeordnet ist.

Die Kontrollstation enthält in ihrem Inneren so die für die Kontrolle von Personen und Gepäck erforderlichen Prüfeinrichtungen und -anlagen, die vom Einsatzort und den Sicherheitsanforderungen abhängig variieren können. Er ist als gesamtes mit allen darin befindlichen Prüfeinrichtungen und -anlagen einfach zu transportieren und ohne besonderen Aufwand oder Werkzeuge schnell in Betrieb zu nehmen. Vorteilhaft kann die Kontrollstation als Kontrollpunkt zwischen einem unkontrollierten räumlichen Bereich und einem kontrollierten Bereich eingesetzt werden, beispielsweise am Eingangsbereich einer geschlossenen Sportanlage. Ebenso kann sie vorteilhaft am Ausgang von Produktions-oder Forschungsanlagen zur Kontrolle der die Anlage verlassenden Personen eingesetzt werden, um den Diebstahl oder die unerlaubte Mitnahme von Gegenständen oder Materialien zu verhindern, beispielsweise von Nuklearmaterialien aus Nuklearanlagen.

"Containerartig" bedeutet dabei für die Raumzelle, dass sie in ihrer Größe, ihrer Form, ihrem Gewicht und ihrer Festigkeit so gestaltet ist, dass sie mit den üblichen standardisierten Transportfahrzeugen zu Land, auf See oder in der Luft transportiert werden kann.

Die Unteransprüche enthalten bevorzugte, da besonders vorteilhafte Ausgestaltungen einer erfindungsgemäßen Kontrollstation.

Nachfolgend wird die Erfindung anhand eines bevorzugten Ausführungsbeispiels näher erläutert:
Figur 1 zeigt als Draufsicht eine Kontrollstation im Betriebszustand mit geöffneten Toren,
Figur 2 zeigt eine Seitenansicht im Betriebszustand und
Figur 3 zeigt schematisch die Öffnungsweise der Tore.

Die in der Zeichnung dargestellte Kontrollstation dient zur Überprüfung von Personen und deren Handgepäck, die als Besucher an einer Veranstaltung, beispielsweise einer Sportveranstaltung, teilnehmen. Sie wurde für diese Veranstaltung als Kontrollpunkt im Eingangsbereich der Veranstaltungsanlage aufgestellt, so dass alle Besucher zur Überprüfung die Kontrollstation durchqueren müssen.

Die Kontrollstation besteht aus einer transportablen, containerartigen Raumzelle 1, die an zwei gegenüberliegenden Wänden jeweils zumindest ein Tor 2, 3 aufweist. Die Tore 2, 3 sind an der oberen Kante der jeweiligen Wand angelenkt, so dass sie zum Verschließen der Raumzelle 1 für den Transport nach unten geschwenkt werden können. Zwischen dem Tor 2 an der Eingangsseite und dem Tor 3 an der Ausgangsseite ist eine Durchgangszone 4 für Personen gebildet, in deren Bereich eine Personenprüfeinrichtung 5 angeordnet ist.

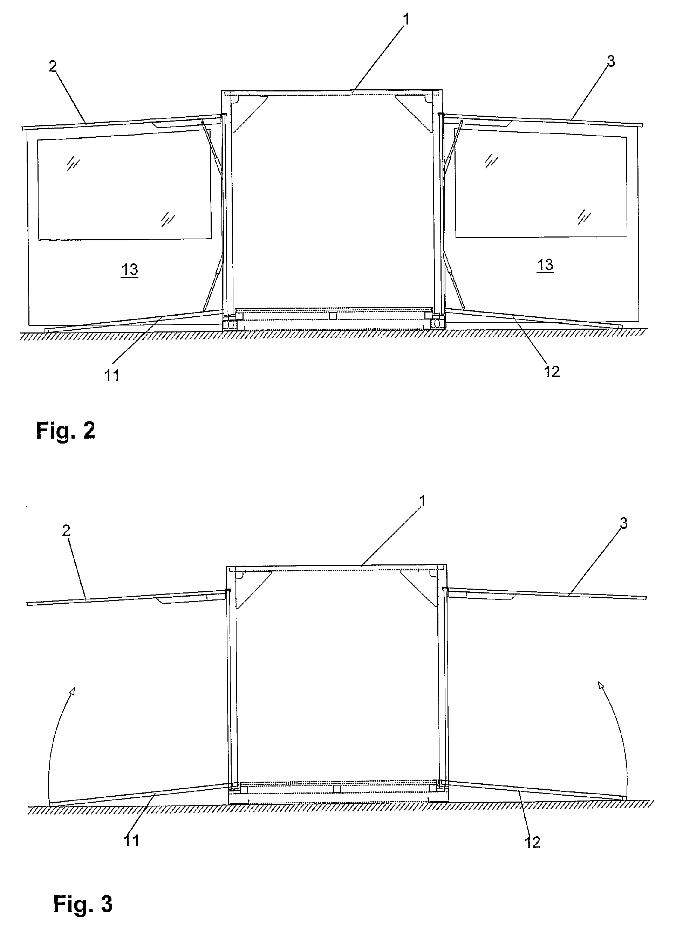

In Betriebsstellung sind die Tore 2, 3 in eine in etwa waagerechte Position hochgeklappt, wie in den Figuren 2 und 3 dargestellt ist. Nach Art eines Vordaches vergrößern sie so den witterungsgeschützen Bereich der Kontrollstation. In diesem Bereich kann von einer Kontrollperson eine manuelle Zusatzkontrolle sowohl des Gepäcks als auch der Personen durchgeführt werden, wenn dies für notwendig angesehen wird.

Im Ausführungsbeispiel ist die Personenprüfeinrichtung 5 ein torförmiger Metalldetektor, der zur Überprüfung auf metallische Gegenstände, beispielsweise Waffen, durchschritten wird. Alternativ oder zusätzlich können im Durchgangsbereich auch Detektionsgeräte für am Körper versteckte Explosivstoffe, Drogen, radioaktive Stoffe oder andere Materialien angeordnet sein, deren Vorhandensein geprüft werden soll.

Neben der Durchgangszone 4 ist eine Gepäckprüfanlage 6 angeordnet, mit der das von der Person mitgeführte Handgepäck auf interessierende Gegenstände oder Materialien geprüft wird. Im Ausführungsbeispiel wird eine übliche Röntgenprüfanlage eingesetzt, in der das Handgepäck von Röntgenstrahlen durchleuchtet und so auf das Vorhandensein von Waffen, Sprengstoffen etc. geprüft wird. Alternativ oder zusätzlich können auch andere bekannte Prüfanlagen für Gepäck installiert werden, beispielsweise auf Röntgenbeugung oder Nuklear-Quadropol-Resonanz basierende Anlagen. In Abhängigkeit vom Einsatzzweck der Kontrollstation wird so das Gepäck auf relevante Gegenstände und/oder Materialien, beispielsweise Waffen, Explosivstoffe, Drogen, chemische, biologische oder nukleare Materialien, gleichzeitig mit der Person beim Durchgang durch die Raumzelle 1 geprüft.

Die Gepäckprüfanlage 6 enthält auf bekannte Weise ein Transportband 7, auf dem die Gepäckstücke durch den Prüfbereich transportiert werden. Die Transportstrecke des Transportbandes 7 ist an der Eintrittsseite und an der Austrittsseite jeweils durch eine Rollenbahn 8 verlängert, die in Betrieb abgeklappt aus der Raumzelle 1 herausreichen. Für den Transport werden die Rollenbahnen 8 hochgeklappt. Sie befinden sich dann innerhalb der Raumzelle 1.

Innen neben der Gepäckprüfanlage 6 ist in der Raumzelle 1 der Bedienplatz 9 für die Gepäckprüfanlage 6 mit der zugehörigen Auswerteelektronik fest installiert. Der Bildschirm 8 der Prüfanlage 6 steht dabei zweckmäßiger Weise auf einem Sideboard 10, das zugleich als Barriere den Zutritt von Personen an dieser Stelle verhindert.

Falls die Kontrollstation auch zum Aufspüren und/oder Identifizieren von Personen dienen soll, sind an dieser Stelle auch entsprechende Personenidentifikationssysteme installiert.

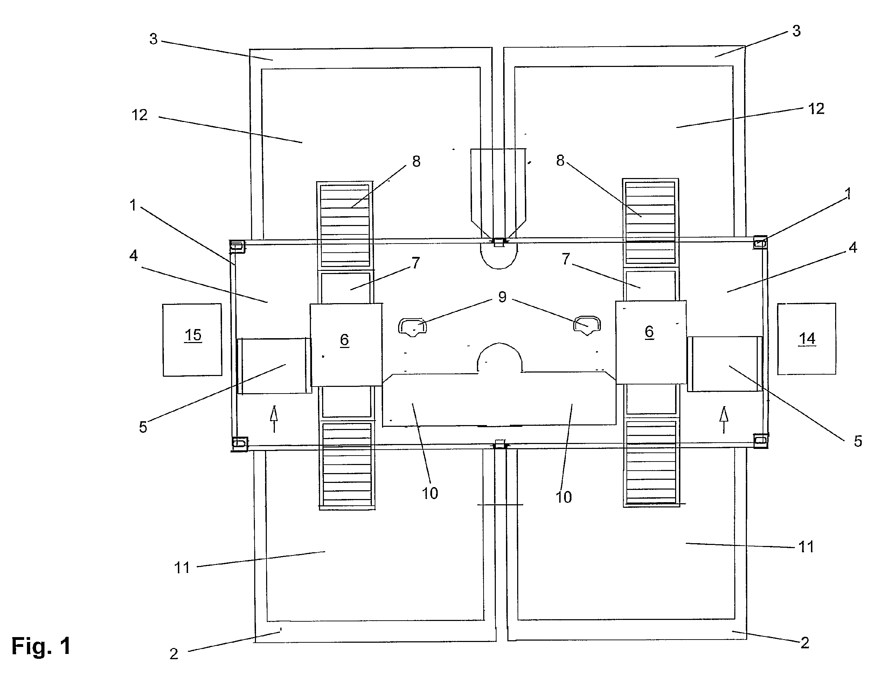

Wie in den Figuren 2 und 3 dargestellt ist unterhalb jedes Tores 2, 3 an der Unterkante der Seitenwand der Raumzelle 1 eine hochschwenkbare Bodenklappe 11, 12 angelenkt. In der in Figur 1 dargestellten Betriebsposition ist jede Bodenplatte 11, 12 abgeschwenkt und bildet so einen stabilen Boden unterhalb des zugehörigen hochgeschwenkten Tores 2, 3. Für den Einsatz im Winter ist es zweckmäßig, den erweiterten Prüfraum unterhalb der hochgeschwenkten Tore 2, 3 seitlich jeweils durch eine senkrechte Plane 13 zu verschließen, die sich von dem hochgeklappten Tor 2, 3 bis zu der niedergeklappten Bodenklappe 11, 12 erstreckt. Zum Beheizen des Kontrollraumes wird ein Heizgerät 14 mitgeführt, das in Betrieb außen neben der Raumzelle 1 aufgestellt wird und erwärmte Luft durch eine entsprechende Öffnung der Raumzelle 1 zuführt. Damit die Kontrollstation energetisch autark ist, wird ein Stromgenerator 15 mitgeführt, der im Betrieb seitlich neben der Raumzelle 1 aufgestellt alle Geräte mit der erforderlichen elektrischen Energie versorgt.

Bei der besonders vorteilhaften Ausführungsform nach der Zeichnung sind die zur Prüfung von Personen und Gepäck erforderlichen Elemente doppelt ausgeführt. Es sind so zwei identische Prüfstrecken vorhanden, die die doppelte Prüfrate an Personen und Gepäck ermöglichen. Ebenso sind die zugehörigen Tore 2, 3 und Bodenplatten 11, 12 entlang der Längsseite der Raumzelle 1 doppelt ausgeführt. Dies ermöglicht es, die Raumzelle 1 halbseitig zu verschließen, um bei entsprechend geringerem Aufkommen an Personen mit entsprechend weniger Prüfpersonal nur eine Prüfstrecke zu betreiben. Zweckmäßigerweise sind die Elemente der beiden Prüfstrecken spiegelbildlich zueinander angeordnet, so dass sich die Bedienplätze 9 der beiden Gepäckprüfanlagen 6 innen nebeneinander befinden.

Für Einsätze an gefährdeten Stellen sind der Rahmen, die Wände und Tore 2, 3 der Raumzelle 1 ausreichend massiv und schützend gestaltet, um einen sicheren Raum für die in der Raumzelle 1 befindlichen Kontrollpersonen und die Prüfgeräte zu bilden. Falls erforderlich, können schußsicheres Glas oder Schutzschilde gegen andere Gefahren an entsprechender Stelle montiert werden.

## Patentansprüche

1. Transportable Kontrollstation zur Überprüfung von Personen und Gepäck, bestehend aus einer transportablen, containerartigen Raumzelle (1), die an zwei gegenüberliegenden Wänden jewells zumindest ein Tor (2, 3) aufweist, zwischen denen Im Inneren der Raumzelle (1) eine Durchgangszone (4) für Personen gebildet ist, wobei im Bereich der Durchgangszone (4) eine Personenprüfeinrichtung (5) und neben der Durchgangszone (4) eine Prüfanlage (6) für Gepäck mit einem Bedienplatz (9) angeordnet ist **dadurch gekennzeichnet, dass** die Tore (2,3) zum Betrieb in eine etwa waagrechte Position hochklappbar sind.

2. Transportable Kontrollstation nach Anspruch 1, **dadurch gekennzeichnet, dass** an der Unterkante der Seitenwand eine hochschwenkbare Bodenklappe (11, 12) angelenkt ist, die im Betrieb einen stabilen Boden unterhalb des hochgeschwenkten Tores (2, 3) bildet.

3. Kontrollstation nach Anspruch 1 oder 2, **dadurch gekennzeichnet, dass** in der Raumzelle (1) ein System zur Personenidentifikation installiert ist.

4. Kontrollstation nach einem der Ansprüche 1 bis 34, **dadurch gekennzeichnet, dass** der Rahmen, die Wände und die Tore (2, 3) der Raumzelle (1) so gestaltet sind, dass sie einen sicheren Raum für die darin befindlichen Kontrollpersonen und Prüfgeräte bilden.

5. Kontrollstation nach einem der Ansprüche 1 bis 4, **dadurch gekennzeichnet, dass** die zur Prüfung von Personen und Gepäck erforderlichen Elemente doppelt ausgeführt sind, um zwei identische Prüfstrecken zu bilden.

## Claims

1. Transportable security-control station for checking individuals and baggage, comprising a transportable, container-like cubicle (1) which, on two opposite walls, has in each case at least one gate (2, 3), between which, in the interior of the cubicle (1), a through-passage zone (4) for individuals is formed, wherein an individual-checking device (5) is arranged in the region of the through-passage zone (4) and a checking installation (6) for baggage, with an operating terminal (9), is arranged alongside the through-passage zone (4), **characterized in that** the gates (2, 3), for operation, can be swung up into an approximately horizontal position.

2. Transportable security-control station according to Claim 1, **characterized in that** a pivot-up floor shutter (11, 12) is articulated on the lower edge of the side wall and, during operation, forms a stable floor beneath the pivoted-up gate (2, 3).

3. Security-control station according to Claim 1 or 2, **characterized in that** a personal-identification system is installed in the cubicle (1).

4. Security-control station according to one of Claims 1 to 3, **characterized in that** the frame, the walls and the gates (2, 3) of the cubicle (1) are configured such that they form a secure chamber for the equipment and security-control individual located therein.

5. Security-control station according to one of Claims 1 to 4, **characterized in that** two of each of the elements necessary for checking individuals and baggage are provided, in order to form two identical checking routes.

## Revendications

1. Station de contrôle transportable servant au contrôle de personnes et de bagages, constituée d'un module de compartiment (1) de type conteneur transportable qui présente à chaque fois au moins une porte (2, 3) au niveau de deux parois opposées, entre lesquelles est formée, à l'intérieur du module de compartiment (1), une zone de passage (4) pour des personnes, un dispositif de contrôle de personnes (5) étant disposé dans la région de la zone de passage (4), et à côté de la zone de passage (4) étant disposée une installation de contrôle (6) pour des bagages comprenant un poste de commande (9), **caractérisée en ce que** les portes (2, 3) peuvent être relevées vers le haut en vue du fonctionnement dans une position approximativement horizontale.

2. Station de contrôle transportable selon la revendication 1, **caractérisée en ce qu'**au niveau de l'arête inférieure de la paroi latérale est articulé un volet de fond pouvant pivoter vers le haut (11, 12), qui forme pendant le fonctionnement un fond stable en dessous de la porte (2, 3) pivotée vers le haut.

3. Station de contrôle selon la revendication 1 ou 2, **caractérisée en ce que** dans le module de compartiment (1) est installé un système d'identification de personnes.

4. Station de contrôle selon l'une quelconque des revendications 1 à 3, **caractérisée en ce que** le cadre, les parois et les portes (2, 3) du module de compartiment (1) sont configurés de telle sorte qu'ils forment un espace sûr pour les personnes de contrôle et les appareils de contrôle qui s'y trouvent.

5. Station de contrôle selon l'une quelconque des revendications 1 à 4, **caractérisée en ce que** les éléments requis pour le contrôle de personnes et de bagages sont réalisés en double afin de former deux sections de contrôle identiques.
